# EUROPEAN PATENT APPLICATION

(11) **EP 0 970 622 A2**
(43) Date of publication of application: **12.01.2000**
(21) Application number: 99113166.5
(22) Date of filing: 07.07.1999
(51) Int. Cl.: A23N 12/00

(54) **Apparatus and process for food treatment**

(30) Priority: 07.07.1998 JP 19133298; 04.03.1999 JP 5638599
(71) Applicant: Awatani, Takeshi, Itano-gun, Tokushima-ken (JP); Inoue, Harutoshi, Itano-gun, Tokushima-ken (JP)
(72) Inventor: Awatani, Takeshi, Itano-gun, Tokushima-ken (JP); Inoue, Harutoshi, Itano-gun, Tokushima-ken (JP)
(74) Representative: Sajda, Wolf E., Dipl.-Phys.

(57) **Abstract**

An apparatus for food treatment is disclosed which has a fiber removing device for removing fibrous contaminants included in food (1) or a food mixture. The fiber removing device comprises a treating surface (T), on which a plurality of hooks are formed to stand and which is disposed to come into contact with the food (1) or the food mixture. It is preferable that the fiber removing device has the treating surface (T) formed of hook parts of a hook-and-loop fastener with cut loops. Also, a process for food treatment is disclosed for removing the fibrous contaminants included in food or a food mixture. The process comprises the step of bringing the treating surface (T), on which the plurality of hooks are formed to stand, into contact with the food or the food mixture.

## Description

### BACKGROUND OF THE INVENTION

### 1. FIELD OF THE INVENTION

The present invention relates to an apparatus for food treatment comprising fiber removing means for removing fibrous contaminants such as hairs, lint, and the like included in food such as vegetables, fruit, confectionery, processed food, or a food mixture made by mixing the above food into liquid or the like. The invention also relates to a process for food treatment using the apparatus for food treatment.

### 2. DESCRIPTION OF THE RELATED ART

In recent years, the quality standard in the field of food, food processing, and the like has become higher and higher. For example, a manufacturer or a dealer of a product including a hair only is punished severely in such a manner if the product cannot meet the quality standard; also, the manufacturer or the dealer suffers a penalty. In such circumstances, there has been a growing request for an apparatus for removing fibrous contaminants such as hairs and lint from food and the like.

As an apparatus for food treatment having fiber removing means, there is known an apparatus which has a plurality of rolls densely implanted on surfaces thereof with a large number of straight or substantially straight hairs, herein referred to as straight hairs, and which removes fibrous contaminants by rotating the rolls to bring the fibrous contaminants in contact with the rolls to be tangled with the hairs on the rolls.

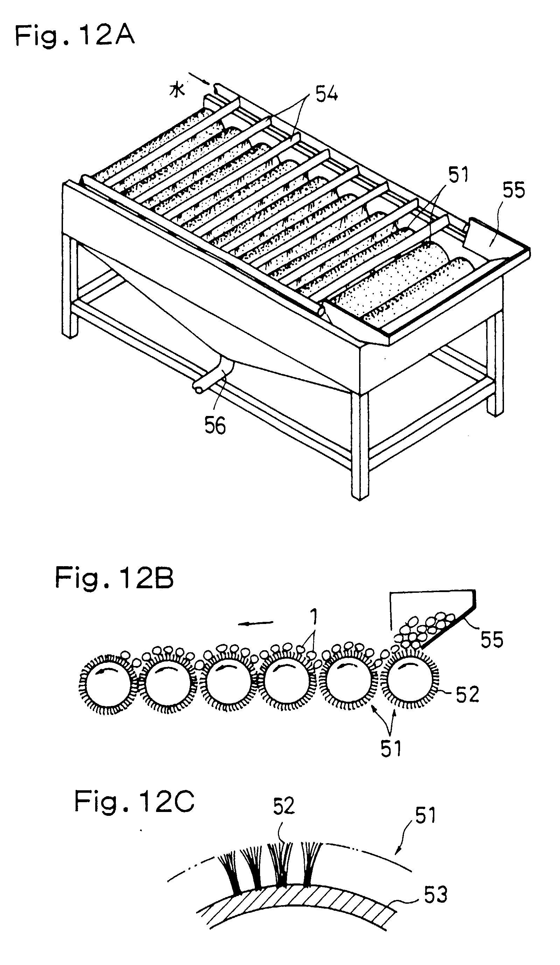

An example of such an apparatus is shown in FIGS. 12A to 12C, in which FIG. 12A is a general view, FIG. 12B is an explanatory view of an operation, and FIG. 12C shows an enlarged view of the roll. In the apparatus shown in FIGS. 12A to 12C, a plurality of hair-implanted rolls 51 formed by densely implanting straight hairs 52 with short lengths of about 5 to 10 mm on rolls 53 are arranged substantially horizontally without a clearance therebetween.

The hair-implanted rolls 51 can be rotated in the same direction, a driving mechanism is not shown, and a plurality of sprinkling pipes 54 for sprinkling from above the hair-implanted rolls 51 to facilitate separation of the contaminants are provided. In such an apparatus, food 1 supplied from a supply portion 55 is carried to the downstream side while coming into contact with the straight hairs 52 on the surfaces of the hair-implanted rolls 51 and rolling by rotation of the hair-implanted rolls 51, see FIG. 12B.

At this time, fibrous contaminants which have partially been separated by sprinkling or the like or which have adhered to the food, are removed by coming into contact and tangling with the straight hairs 52. Sprinkled water is drained through a drain outlet 56, but the fibrous contaminants caught on the hair-implanted rolls 51 do not separate and are not discharged sufficiently.

In such a conventional apparatus, however, because the implanted hairs are straight, the implanted hairs cannot exhibit a function of sufficiently tangling with and catching the fibrous contaminants when the fibrous contaminants come into contact with the implanted hairs. In other words, before the implanted hairs tangle with and catch the fibrous contaminant, the fibrous contaminants separate from the implanted hair. Therefore, the efficiency of removing the fibrous contaminants is low. In another case, the fibrous contaminant, which has once adhered to the implanted hair, separates from the implanted hair and adheres to the food again.

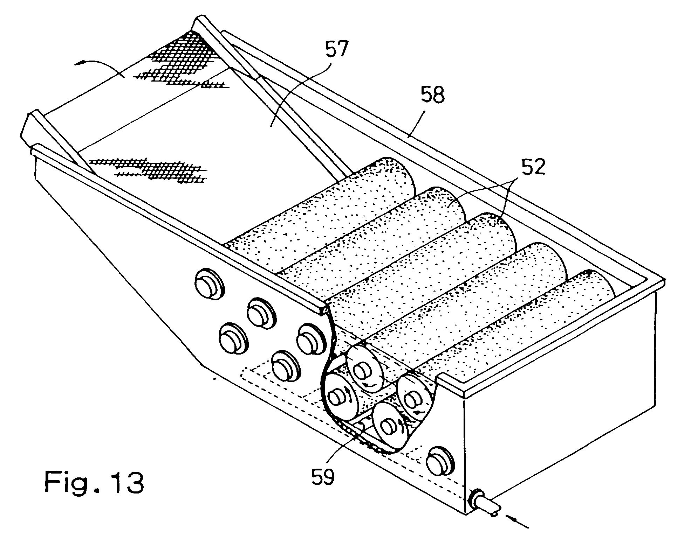

On the other hand, there is another apparatus in which a plurality of hair-implanted rolls 52 similar to those in the apparatus shown in FIGS. 12A to 12C are arranged in a zigzag manner at a distance from each other in a washing tank 58 for storing liquid, and lower portion air spraying pipes 59 are disposed below the hair-implanted rolls 52 as shown in FIG. 13.

In this apparatus, the hair-implanted rolls 52 are rotated to scatter the food 1 in liquid such as water and salt water (a food mixture), the fibrous contaminants are liberated into the liquid by vibration and convection generated by aeration from the lower portion air spraying pipes 59, and the fibrous contaminants are tangled with and caught by the hair-implanted rolls 52. The treated food mixture is carried and discharged while being separated into solids and liquid by a screen conveyer 57 or the like provided on the downstream side thereof.

In this conventional apparatus, as compared with the former apparatus, separation of the fibrous contaminants from the food is satisfactory and removing efficiency is improved. However, the apparatus has inevitable drawbacks of insufficient function of tangling with and catching the fibrous contaminants in a similar manner as in the first apparatus, so that the separation from the implanted hairs and adhesion to the food again of the fibrous contaminants, which have once adhered to the implanted hairs are inevitable.

In other words, in both of the above conventional apparatus, the implanted hairs cannot exhibit a function of sufficiently tangle with and catch the fibrous contaminants when the fibrous contaminants come into contact with the implanted hairs, because the implanted hairs are straight.

Furthermore, because the fibrous contaminants, which have once adhered to the implanted hairs, are liable to separate from the implanted hairs and adhere to the food again, it has been impossible to reach a practical level of removing rate, i.e. such a level as to meet the desired quality standards even if the separation of the fibrous contaminants is facilitated by liquid spraying or removal in liquid.

On the other hand, there is a dry vibration cleaning apparatus for shaking off dust, which has adhered to the surface of dry food and the like, by vibration. However, because fibrous contaminants such as hairs and lint have a strong adhesion, the fibrous contaminants resist falling off by vibration and are liable to adhere to the food again when they have fallen off. Therefore, little effect of removing the fibrous contaminants by the apparatus can be expected.

Therefore, it is an object of the present invention to provide an apparatus and a process for food treatment which can sufficiently and completely remove fibrous contaminants included in food or the like.

### SUMMARY OF THE INVENTION

According to the invention, this object has been solved in an advantageous and satisfying manner. The present inventors have found that a treating surface on which a plurality of hooks are formed to stand and especially a treating surface formed with hook parts of hook-and-loop fasteners are effective at removing fibrous contaminants. Hence, the present invention was completed after various studies.

Accordingly, the apparatus for food treatment according to the present invention comprises fiber removing means for removing fibrous contaminants included in food or food mixtures, and the fiber removing means have a treating surface on which a plurality of hooks are formed to stand and which are disposed to come into contact with the food or the food mixture.

By means of this apparatus, because the treating surface on which the plurality of hooks are formed to stand comes into contact with the food or the like, the hooks easily catch the fibrous contaminants such as hairs, and the caught fibrous contaminants are less prone to fall off because of the shape of the hooks.

Furthermore, because the apparatus does not employ the conventional plurality of straight hairs to catch the fibrous contaminants therebetween, it is unnecessary to densely form a large number of standing hooks.

Therefore, the apparatus is advantageous in respect of costs and the fibrous contaminants are less prone to fall off due to an external force. As a result, the fibrous contaminants included in food or the like can be removed more completely.

In the above apparatus according to the invention, the hooks are preferably made of flexible material. In this case, because the hooks are flexible, the hooks are deformed flexibly and come into contact with food or the like efficiently. Because there is the possibility that the orientation of the respective hooks is changed such that the hooks catch the fibrous contaminants in a deformation process of the hooks, the effect of removing the fibrous contaminants is further enhanced. Because the hooks are flexible, the hooks are less prone to damage the food.

The fiber removing means preferably have the treating surface formed of the hook parts of the hook-and-loop fasteners with cut loops. In this case, as indicated by results of working examples which will be described later, the fibrous contaminants can be removed more completely. In other words, the hooks are disposed in different orientations on the above hook-and-loop fasteners in general in such a manner that the hooks can easily be engaged with loops of a loop part. Therefore, chances to catch the fibrous contaminants are increased. Furthermore, the hook-and-loop fasteners are easy to get and are advantageous in respect of costs, and the treating surfaces can be easily changed.

The invention can be realized in various manners and different embodiments of the invention as specified below.

According to a first embodiment, the fiber removing means have a trough the longitudinal direction of which is inclined from a horizontal plane and which is supported for a swinging movement with a swinging axial center mostly in parallel to the longitudinal direction. Also, a swinging movement applying mechanism is provided for reciprocating and swinging the trough from a reference position of the trough where the width direction of the trough is substantially horizontal. Also, the trough is provided at a bottom face thereof with the treating surface.

In this case, by reciprocating and swinging the inclined trough, the food or the like supplied from the upper side of the inclination can roll down in a zigzag manner, thereby obtaining the above-described acts and effects while improving the efficiency of the contact between the treating surface and the food or the like. At this time, because the fibrous contaminants are separated from the food or the like, while the food or the like is rolling, the fibrous contaminants are not strained in the separation and are less prone to be cut off so that the apparatus is also effective to long fibrous contaminants such as hairs. Because the food or the like is moved and agitated not so vigorously as compared with other embodiments, the apparatus is suitable for food or the like which is liable to loose its shape or is small in size.

According to a second embodiment of the present invention, the fiber removing means have a vibration applying mechanism for applying vibration to a placing face on which the food or the food mixture is placed, and the placing face is provided with the treating surface. In this case, while the food or the like is caused to jump and roll by applying the vibration and the food and the fibrous contaminants receive a separating effect by the movements, the food comes into contact with the treating surface repeatedly. As a result, the above acts and effects can be obtained while improving the contact efficiency and the separating performance. By adjusting the vibration period and the vibration amplitude, the apparatus is suitable for treatment of fibrous contaminants included in smaller food.

According to a third embodiment of the present invention the fiber removing means have a plurality of rolls which are provided at surfaces thereof with the treating surfaces and which are disposed substantially close to each other, wherein a rotation driving means is provided for rotating the rolls in the same direction. In this case, rotation of the rolls and carriage of the food or the like can be controlled separately from each other.

Therefore, it is possible to increase the effective contact area as compared with the above-described embodiments by separately adjusting the carrying speed of the food or the like and the peripheral velocity of the rolls when the food or the like is brought into contact with the treating surfaces on the rolls to remove the fibrous contaminants. As a result, the fibrous contaminants can be removed more reliably.

According to a fourth embodiment of the invention, the fiber removing means have a pipe-shaped body provided at the inner face thereof with the treating surface and rotatably supported in a state in which the pipe-shaped body is inclined with respect to the horizontal plane, and a rotation driving mechanism is provided for rotating the pipe-shaped body. In this case, the food drops while being raked up by rotation of the inner wall of the pipe-shaped body. By the lifting and dropping of the food, the food is agitated vigorously and repeatedly brought into intimate contact with the treating surface. Therefore, the fibrous contaminants can be caught efficiently. Furthermore, because the treating surface can easily be designed to be large, the apparatus has a wide range of applications.

According to a fifth embodiment of the present invention, the food mixture can be a liquid including food, wherein the fiber removing means have a flow tank for causing the liquid to flow; a flow controlling plate is provided for causing the liquid to flow non-linearly in the flow tank, and the flow controlling plate is provided with the treating surface. In this case, when the food flows toward the downstream side with the liquid, the liquid flows in a non-linear manner, while the food tries to flow linearly due to inertia force and hits the flow controlling plate.

As a result, turbulent flow is generated to cause effects of agitating and washing of the food in the liquid. In this manner, the fibrous contaminants which have adhered to the food are liable to be separated and to be liberated from the food. Furthermore, moving close to each other of the food and the flow controlling plate or hit of the food at the flow controlling plate provides extremely many chances of catching the fibrous contaminants.

According to a sixth embodiment of the present invention, the food mixture can be liquid including food, wherein the fiber removing means have a flow tank for causing the liquid to flow, an agitating plate for causing the liquid to flow non-linearly in the flow tank, and a driving mechanism for driving the agitating plate, wherein the agitating plate is provided with the treating surface.

In this case, because the agitating plate driven by the driving mechanism causes the fluid to flow non-linearly in the flow tank, turbulent flow is generated to cause effects of agitating and washing of the food in the liquid. In this manner, the fibrous contaminants which have adhered to the food are liable to be separated and to be liberated from the food. Furthermore, moving close to each other of the food and the agitating plate or hit of the food at the agitating plate and a long flowing path provide extremely many chances of catching the fibrous contaminants.

According to a sixth embodiment of the present invention, the food mixture can be liquid including food, wherein the fiber removing means comprise a flow tank which is partitioned into upper and lower portions by a partitioning plate having a tendency to prevent the food from passing therethrough and which causes the food to flow on the upper side of the partitioning plate by causing the liquid to flow.

An agitating plate is provided for swinging from a reference position thereof where the agitating plate is vertical to or inclined with respect to a liquid level with a swinging axial center substantially in parallel to a flow direction of the flow tank. A driving mechanism is provided for reciprocating and swinging the agitating plate. Also, aeration means are provided which are disposed on the lower side of or in the vicinity of the partitioning plate below the agitating plate and which have a releasing outlet for releasing gas into the liquid; the agitating plate is provided with the treating surface.

In this case, because the agitating plate swings from the reference position thereof where the agitating plate is vertical to or inclined with respect to the liquid level with the swinging axial center substantially in parallel to the flow direction of the flow tank, agitation is possible while the flow passage of the food is maintained to some extent. As a result, the above-described operations and effects can be obtained mainly by horizontal agitation while preventing the flowing of the food from being partial or stagnant.

At this time, because aeration is carried out from below, vertical agitation can be carried out by an upward-moving stream and a downward-moving stream. Moreover, because there is a state in which the fiber catching surface is inclined relative to the water surface in the swinging movement of the agitating plate, chances for the food and the fibrous contaminants flowing by the upward-moving stream or the downward-moving stream to come close to or in contact with the fiber catching surface are further increased.

In other words, because of the synergistic effect of the aeration and the swinging movement of the agitating plate in addition to horizontal and vertical agitating operations which are generated separately, a further enhanced removing effect can be obtained.

Moreover, a process for food treatment of the invention is disclosed which is suitable for removing fibrous contaminants included in food or a food mixture, which method comprises the step of bringing a treating surface, on which a plurality of hooks are formed to stand, into contact with the food or the food mixture. According to the process for food treatment according to the invention, it is by the above-described effects that the fibrous contaminants included in the food can be removed more completely and efficiently.

### BRIEF DESCRIPTION OF THE DRAWINGS

- FIG. 1: is a perspective view of an example of the apparatus according to a first embodiment of the invention.
- FIGS. 2A and 2B: are perspective views of examples of an apparatus according to a second embodiment of the invention.
- FIG. 3: is a perspective view of an example of an apparatus according to a third embodiment of the invention.
- FIGS. 4A and 4B: are perspective views of an example of an apparatus according to a fourth embodiment of the present invention.
- FIGS. 5A to 5D: are sectional views of an essential portion of another example of the apparatus according to the fourth embodiment of the invention.
- FIG. 6: is a perspective view of an example of an apparatus according t a fifth embodiment of the invention.
- FIGS. 7A to 7D: are plan views of an essential portion of another example of the apparatus according to the fifth embodiment of the invention.
- FIG. 8: is a perspective view of an example of an apparatus according to a sixth embodiment of the present invention.
- FIG. 9: is a left side view of an example of an essential portion according to the sixth embodiment of the invention.
- FIGS. 10A and 10B: show an example of an agitating plate of the apparatus according to the sixth embodiment of the invention.
- FIGS. 11A to 11D: are sectional views of examples showing hooks according to the invention.
- FIGS. 12A to 12C: are perspective views of an example of a conventional apparatus.
- FIG. 13: is a perspective view of another example of a conventional apparatus.

### DETAILED DESCRIPTION OF THE PREFERRED EMBODIMENTS

Embodiments of the present invention will now be described in detail with reference to the drawings. An apparatus for food treatment of the invention includes a food washing apparatus comprising only a fiber removing means, a food washing apparatus having another washing means, and an apparatus for food treatment or the like combined with a dryer, a heater, a mixer, a sterilizer or the like other than the washing means.

### Treating surface

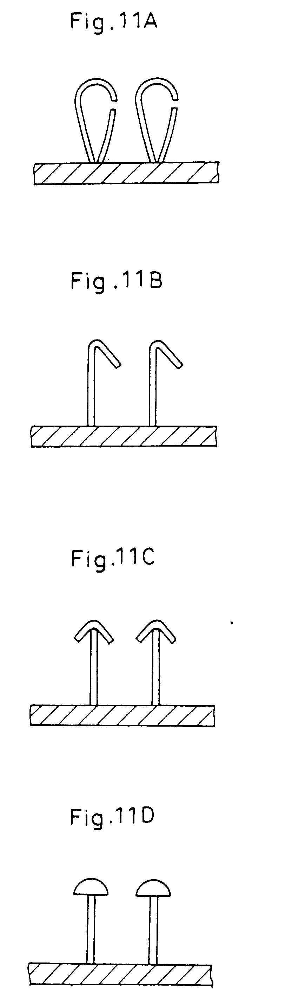

The apparatus for food treatment of the invention is an apparatus comprising fiber removing means for removing fibrous contaminants included in food or a food mixture, and the fiber removing means have a treating surface for removing fibers. On the treating surface, a plurality of standing hooks are formed. The hooks are of a concept including any shape having a tip end folded back through 90° or more. Examples of the hooks are shown in FIGS. 11A to 11D.

FIG. 11A shows an example of a treating surface formed of hook parts of a hook-and-loop fastener with cut loops. Although the loops in FIG. 11A are in the same orientation, it is preferable that the loops are in different orientations.

FIG. 11B shows the treating surface on which a plurality of hooks are formed to stand with their tip end portions folded through down with respect to the vertical arm through about 60°. FIG. 11C shows the treating surface on which a plurality of hooks are formed to stand with their tip end portions branching and being folded down. Although each of the tip end portions branches into two ends to be folded, the tip end may also branch into three or more ends.

FIG. 11D shows an example of a treating surface formed of hook parts which form a so-called mushroom-shaped hook-and-loop fastener. The example shown in FIG. 11D corresponds to the hooks with their tip ends folded back through about 90°. The fibrous contaminants which have once been caught by the treating surface shown in FIG. 11A are less liable to fall off and the treating surface shown in FIG. 11A is more excellent in durability as compared with the treating surface shown in Fig. 11D.

The material of the hooks may be any kind of synthetic resin, metal, fiber processed articles, and is preferably a flexible material. As a flexible material, a material which can be deformed by an external force and can restore its original shape to some extent may be used, and examples of such materials are various resins, organic elastic bodies, inorganic elastic bodies, and the like.

### First embodiment

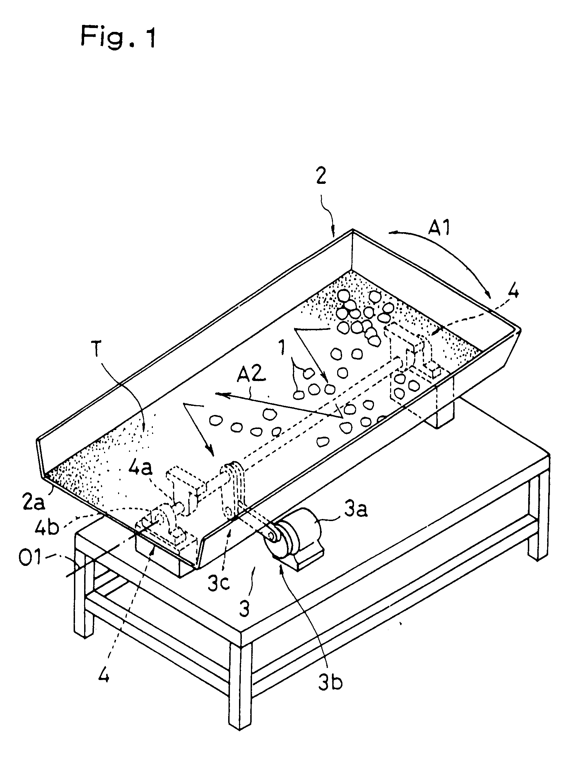

As shown in FIG. 1, the first embodiment of the invention is an example in which fiber removing means comprise a trough 2 of which the longitudinal direction is inclined from the horizontal plane and which is supported for swinging movement with a swinging axial center O1 substantially in parallel to the longitudinal direction. A swinging movement applying mechanism 3 is provided for reciprocating and swinging the trough 2 from a reference position of the trough 2 where the width direction of the trough 2 is substantially horizontal; and the trough 2 is provided at a bottom face 2a thereof with the treating surface T.

The swinging axial center O1 is positioned below the trough 2, and the trough 2 is supported for swinging movement with the swinging axial center O1 by swinging support mechanisms 4 mounted at two positions at opposite end portions in the longitudinal direction of the trough 2. Each swinging support mechanism 4 comprises a swinging shaft 4a fixed to the trough 2 and a swinging bearing 4b fixed to a body.

Although FIG. 1 shows the swinging axial center O1 in parallel to the longitudinal direction of the trough 2, the swinging axial center O1 may be at some degrees of an angle with respect to the longitudinal direction. The distance between the bottom face 2a of the trough 2 and the swinging axial center O1 may be larger than that in FIG. 1, but the shorter distance is preferable to decrease a movement of a supply position of food. The angle through which the trough 2 is to be inclined is properly determined according to the degree of tendency of the food or the like to roll.

The swinging movement applying mechanism 3 comprises a motor 3a, a crank mechanism 3b for changing the rotary movement of the motor 3a into a reciprocating movement, and a swinging link mechanism 3c for changing the reciprocating movement into the swinging movement. The angle through which the trough 2 swings reciprocally with respect to the reference position of the trough 2, where the width direction of the trough 2 is substantially horizontal, is different depending on the food to be treated but is preferably about ±15° to ±45°.

The treating surface T is provided on the upper side of the bottom face 2a of the trough 2. The hook parts of the hook-and-loop fasteners with cut loops are fixed to the treating surface T. The hook-and-loop fasteners may be detachably attached. In this case, the back side of the treating surface T which is an attaching side may also be provided with hook-and-loop fasteners, and the treating surface T may be attached to the hook-and-loop fasteners provided to the bottom face 2a.

In this embodiment, if the food 1 is supplied from the upper side of the inclination while swinging the trough 2 by the swinging movement applying mechanism 3 as shown by an arrow A1, the food 1 rolls down along a zigzag path as shown by arrows A2. At this time, the food 1 rolls while coming into contact with the hook-and-loop fastener as the treating surface, and the fibrous contaminants included in the food 1 are hooked and caught by the hooks projecting on the treating surface T.

Similar to the present embodiment, the removing effect can also be obtained to some extent only by allowing the food or the like to pass on the treating surface provided to the trough which is fixed in an inclined state, but not swinging. Such an embodiment can be effectively applied to a carriage passage utilizing gravity of the food or the like.

### Second embodiment

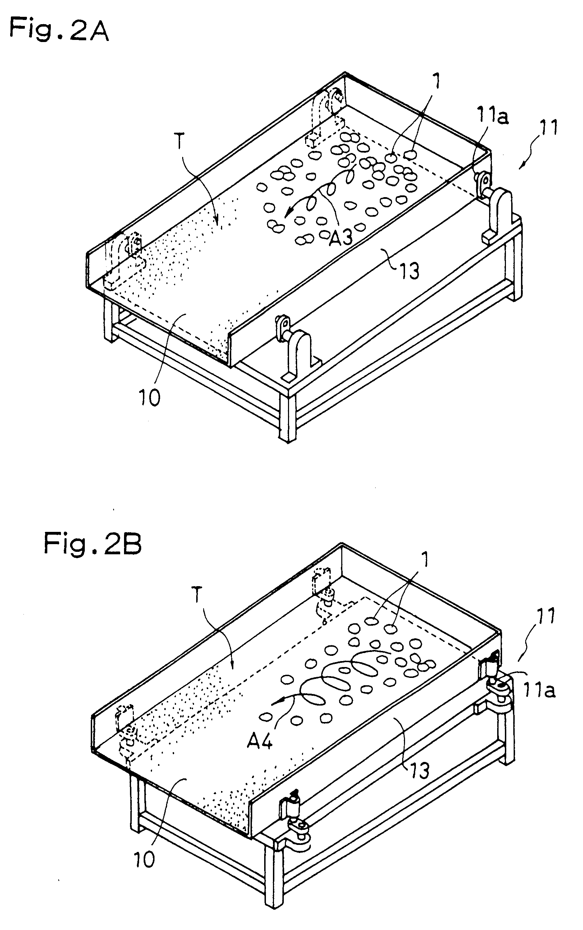

The second embodiment of the invention is an example in which the fibrous removing means have a vibration applying mechanism 11 for applying vibration to a placing face 10 on which the food or the like is placed, and the placing face 10 is provided to the treating surface T as shown in FIGS. 2A and 2B.

Examples of the vibration applying mechanism 11 are mechanisms for applying vertical vibration as shown in FIG. 2A, for applying horizontal vibration as shown in FIG. 2B, and for applying vibration by various vibrators. In an apparatus shown in FIG. 2A, the rotation of a horizontal crank shaft (a driving device is not shown) is transmitted to a side face 13 of the placing face 10 as a circular movement of a crank pin 11a through a bearing portion supporting the crank pin 11a for rotation, thereby applying vertical vibrations as shown by an arrow A3.

In an apparatus shown in FIG. 2B, the rotation of a vertical crank shaft is transmitted to a side face 13 of the placing face 10 as a circular movement of a crank pin 11a through a bearing portion supporting the crank pin 11a for rotation, thereby applying horizontal vibration as shown by an arrow A4.

The placing face 10 may be a flat plate or a stepped bottom face and attached with hook-and-loop fasteners as a treating surface T. If the vibration is not uniform, it may not be necessary to incline the placing face 10. If the vibration is uniform and the food or the like is continuously treated while being carried, it is preferable to incline the placing face 10 with respect to the horizontal plane.

In each of the embodiments, by supplying the food or the like from the upstream side while applying the above-described vibration, the food 1 is caused to jump and rotate while being carried if necessary, and the food 1 and the fibrous contaminants or the like repeatedly come into contact with the hook-and-loop fasteners while receiving a separating effect by the movements of the food 1, and the fibrous contaminants are caught by the hooks of the hook-and-loop fasteners.

It is preferable that the treating surface T has projections and depressions corresponding to the size or the like of the food, thereby increasing the effective contact area to enhance the removing effect.

### Third embodiment

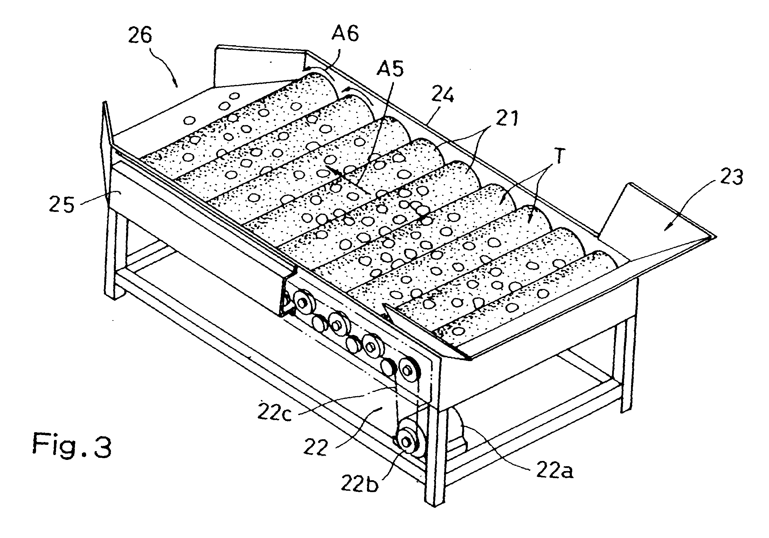

The third embodiment of the invention is an example in which the fiber removing means have a plurality of rolls 21 which are provided at surfaces thereof with the treating surfaces T and which are disposed substantially close to each other. A rotation driving mechanism 22 is provided for rotating the rolls 21 in a same direction as shown in FIG. 3. This embodiment is similar to the conventional apparatus shown in FIG. 12, but the hair-implanted rolls are replaced by the rolls of the present invention. The sprinkling treatment from above can be employed in this embodiment according to characteristics and shapes of the food.

In other words, in the apparatus shown in FIG. 3, the plurality of rolls 21 provided at the surfaces thereof with the treating surfaces T formed of a hook-and-loop fasteners are arranged substantially horizontally and substantially without a distance from each other. The rolls 21 are supported by a frame 24 and can be rotated in the same direction shown by arrows A6. As the rotation driving mechanism 22, a mechanism can be employed for transmitting a rotational force of a sprocket 22b of a motor 22a with a speed-reducing mechanism to sprockets mounted to the respective rolls 21 through a chain 22c or the like.

By means of this apparatus, the food 1 supplied from a supply portion 23 rolls down and is carried to the downstream side in a direction shown by an arrow A5 by the rotation of the rolls 21 while coming into contact with the treating surfaces T on the surfaces of the rolls 21 and is discharged through the discharge portion 26.

Instead of replacing the hair-implanted rolls of the conventional apparatus shown in Fig. 12 by the rolls of the invention, the hair-implanted rolls of the conventional apparatus shown in FIG. 13 may be replaced by the rolls according to the present invention. In this case, separation of the fibrous contaminants from the food is favorable and the removing efficiency is further improved.

### Fourth embodiment

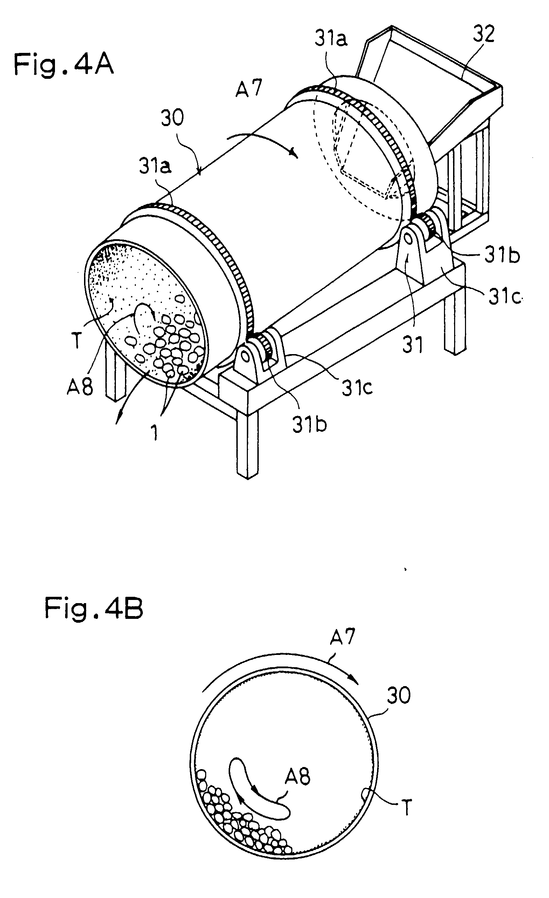

The fourth embodiment according to the invention is an example in which the fiber removing means have a pipe-shaped body 30 provided at the inner face thereof with the treating surface T and rotatably supported in a state in which the pipe-shaped body 30 is inclined with respect to the horizontal plane, and have a rotation driving mechanism 31 for rotating the pipe-shaped body 30 as shown in FIGS. 4A and 4B.

The pipe-shaped body 30 is a cylinder having a circular shape in cross-section as shown in FIG. 4B. A hopper-shaped supply portion 32 is provided to an end portion on the upper side of the inclination of the pipe-shaped body 30, and the end portion of the supply portion 32 is inserted into the cylinder.

Racks 31a are mounted on two positions of the outer periphery of a body portion of the pipe-shaped body 30 and are supported for rotation by four pinions 31b and bearings 31c thereof mounted to a frame. The rotation driving mechanism 31 comprises a single driving device or a plurality of driving devices (not shown) in addition to the racks 31a, pinions 31b, and bearings 31c.

In this apparatus, the food 1 introduced from the supply portion 32 drops while being raked up as shown by an arrow A8 by the rotation of the pipe-shaped body 30 in the direction shown by an arrow A7. By the lifting and dropping of the food 1, the food 1 is agitated vigorously and carried to the downstream side while coming into contact with the hook-and-loop fasteners intimately and repeatedly. By the dropping and scattering, fibrous contaminants or the like are separated from the food 1 and come into contact with and are caught by the hooks of hook-and-loop fasteners. Especially in a case in which the pipe-shaped body 30 having the circular shape in cross-section as shown in FIG. 4B is used, such a pipe-shaped body 30 can be applied to a wide range of food from small food to relatively big food, because the treating surface T is smooth.

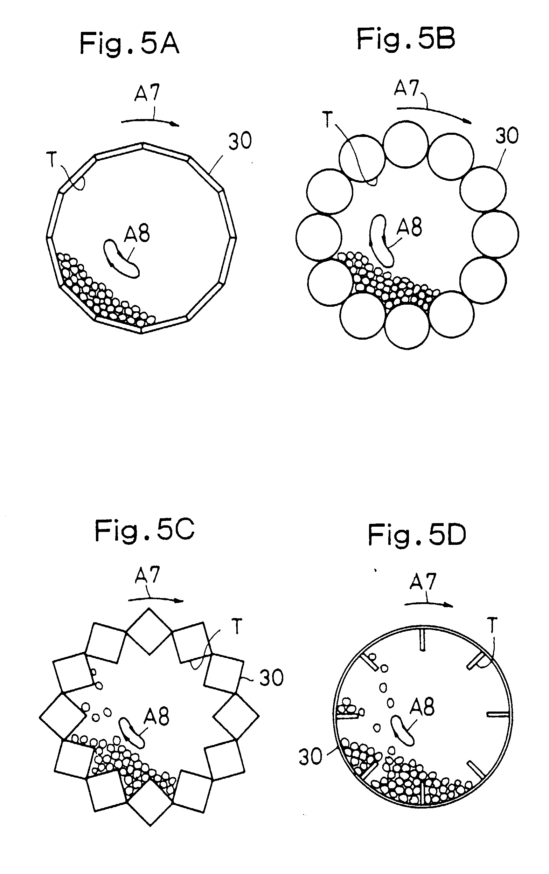

As the pipe-shaped body 30, not only the pipe-shaped body 30 having the circular shape in cross-section, but also the pipe-shaped bodies 30 shown in FIGS. 5A to 5D can be employed. The pipe-shaped bodies 30 shown in FIGS. 5A to 5D have the following advantages with respect to food to be treated.

FIG. 5A shows a pipe-shaped body 30 comprising partial elements which are formed by attaching hook-and-loop fasteners to rectangular plates and are arranged to form a polygon. By this apparatus, the raking-up performance of the cylindrical face can be enhanced and cleaning off of the caught fibrous contaminants is facilitated because the elements having the removing function can easily be attached and detached.

FIG. 5B shows a pipe-shaped body 30 comprising elements which are formed by attaching hook-and-loop fasteners to faces of small-diameter cylinders and are arranged without a distance therebetween to form a cylinder. It is possible to clean the contaminants adhering to the elements easily by rotating the individual small cylinders through 180° in a state in which the elements are arranged.

The apparatus has a further improved raking-up performance as compared with the above apparatus having the flat plates, because the contact between the food or the like and the hook-and-loop fasteners is intimate, and the contaminants can be removed favorably. FIG. 5C shows an example in which the cylindrical elements shown in FIG. 5B are replaced by polygonal elements.

FIG. 5D shows a structure comprising a plurality of raking-up blades which can easily be attached and detached and which are attached at their raking-up faces with hook-and-loop fasteners. In this apparatus, agitation by raking up is made vigorously and attachment, detachment, and cleaning of the contaminant removing elements are facilitated.

### Fifth embodiment

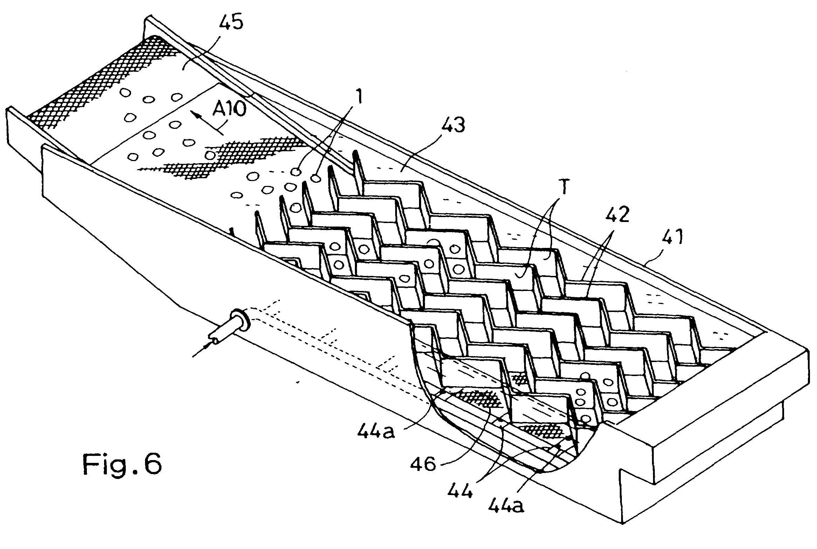

The fifth embodiment of the present invention is an example in which the food mixture can be liquid including food 1 The fiber removing means have a flow tank 41 for causing a liquid 43 to flow, and flow controlling plates 42 for causing the liquid 43 to flow in a non-linear manner in the flow tank 41, wherein the flow controlling plates 42 are provided with the treating surfaces T as shown in FIG. 6.

As a mechanism for causing the liquid 43 to flow through the flow tank 41, it is possible to use a circulation piping having a pump, to use liquid supplied from the upstream side in one pass, or to use flow of a washing step of a conventional apparatus (not shown). As a liquid which is a food mixture, a mixture of food and liquid such as water and salt water, or food which itself contains food in liquid can be used.

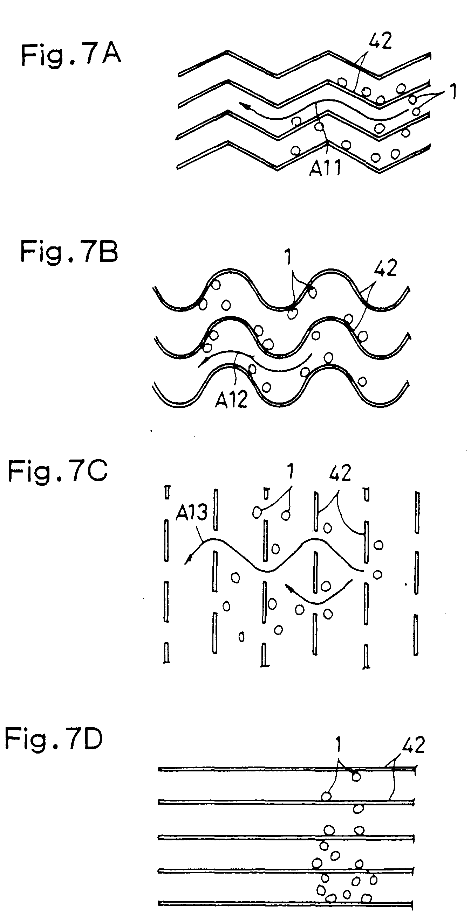

Examples of the flow controlling plates 42 are shown in FIGS. 7A to 7C. The flow controlling plates 42 are provided with treating surfaces T formed of the hook-and-loop fasteners. The treating surface T may be provided to the entire flow controlling plate 42 or only to portions of the flow controlling plate 42 which the food 1 in liquid hits.

Even flat flow controlling plates 42 as shown in FIG. 7D are slightly more effective than a conventional apparatus. A contact between such flat flow controlling plates 42 and the food and separation of the fibrous contaminants from the food 1 is favorable in some cases depending on flow conditions or the kind of food. A considerable effect can be exhibited in such cases.

In order to facilitate separation of the fibrous contaminants from the food mixture, air spraying pipes 44 are provided below flow passages, and the food mixture is aerated from openings 44a of the air spraying pipes 44 to be agitated, thereby increasing the contaminant removing effect. The fibrous contaminants caught by the hook-shaped projections hardly flow into fluid again.

On the downstream side of the flow controlling plates 42, a solid-liquid separating device 45 such as a screen conveyer is provided. By carrying and separating the food in sequence in the direction shown by an arrow A10, a continuous treatment becomes possible.

It is preferable to provide a porous bottom plate 46 for forming flow passages of the food 1 together with the flow controlling plates 42 below the flow controlling plates 42. By means of the porous bottom plate 46, it is possible to generate proper flowing and to enhance the removing efficiency. The flow controlling plates 42 can stand on and can be supported by the porous bottom plate 46. As the porous bottom plate 46, punching metal or wire netting which allows efficient aeration from the air spraying tubes 44 is preferable.

In this apparatus, when the food 1 introduced to the upstream side flows toward the downstream side, a turbulent flow is generated to cause effects of agitating and washing of the food 1 in the liquid, becaus the liquid 43 flows non-linearly (in the directions shown by arrows A11 to A13), while the food 1 tries to flow linearly due to inertia force and hits the flow controlling plates 42.

In this manner, the fibrous contaminants which have adhered to the food 1 are separated and are liberated from the food 1. Moving close to each other of the food 1 and the flow controlling plates 42 or hit of the food 1 at the flow controlling plates 42 increases the chances of catching the fibrous contaminants.

### Sixth embodiment

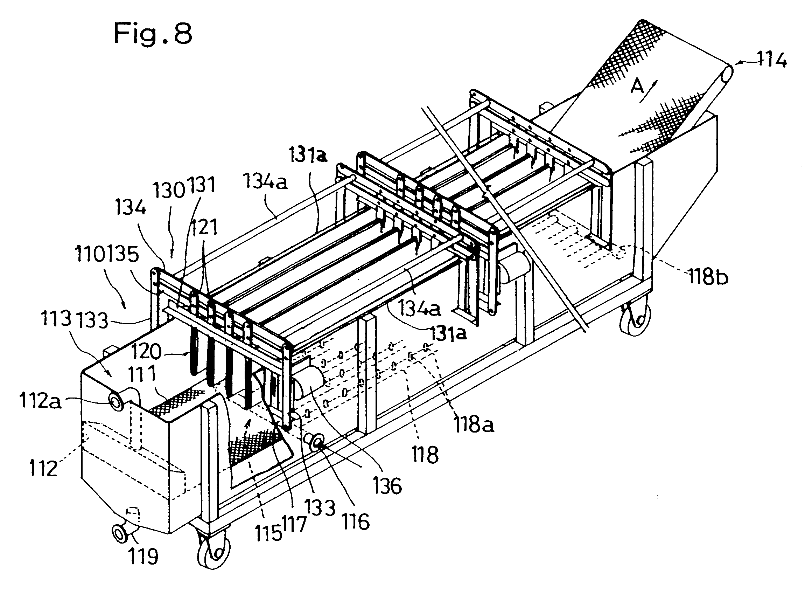

The fiber removing means mainly comprise a flow tank 110 for causing the liquid to flow, agitating plates 120 for causing the liquid to flow non-linearly in the flow tank 110, and a driving mechanism 130 for driving the agitating plates as shown in FIG. 8. In this embodiment, the agitating plates 120 reciprocate and swing while aerating the liquid from the lower portion of the agitating plates 120 takes place.

The flow tank 110 is partitioned into upper and lower portions by a partitioning plate 111 having the tendency to prevent the food from passing therethrough, and the food is caused to flow on the upper side of the partitioning plate 111 by causing the liquid to flow. The liquid flows by supplying running water from a feedwater box 112 disposed on the most upstream side of the flow tank 110 and discharging the water through a drain pipe (not shown) on the downstream side.

The downstream-side face of the feedwater box 112 is defined with a plurality of slits such that the food flows uniformly and running water or the like supplied from a supply pipe 112a is released uniformly through the slits. The upper face of the feedwater box 112 is inclined such that the downstream side of the feedwater box 112 is lower for preventing the food from staying on the feedwater box 112.

The food or the food mixture previously mixed with the liquid is supplied from a food supply portion 113 into the liquid and flows downstream on the upper side of the partitioning plate 111 by the above-described flow. As the partitioning plate 111, punching metal or wire netting, which allows efficient aeration from below, is preferable.

The agitating plates 120 have swinging axial centers which are substantially in parallel to the flow direction of the flow tank 110 and are caused to reciprocate and swing from their reference positions where the agitating plates 120 are substantially vertical to a liquid level by the driving mechanism 130.

The driving mechanism 130 mainly comprises a substantially angular U-shaped fixed frame 131 bridging long side frames of the upper end of the flow tank 110, swinging support portions 132 mounted at opposite lower ends of the fixed frame 131 and each having a swinging axis on the outer side of the swinging support portion 132.

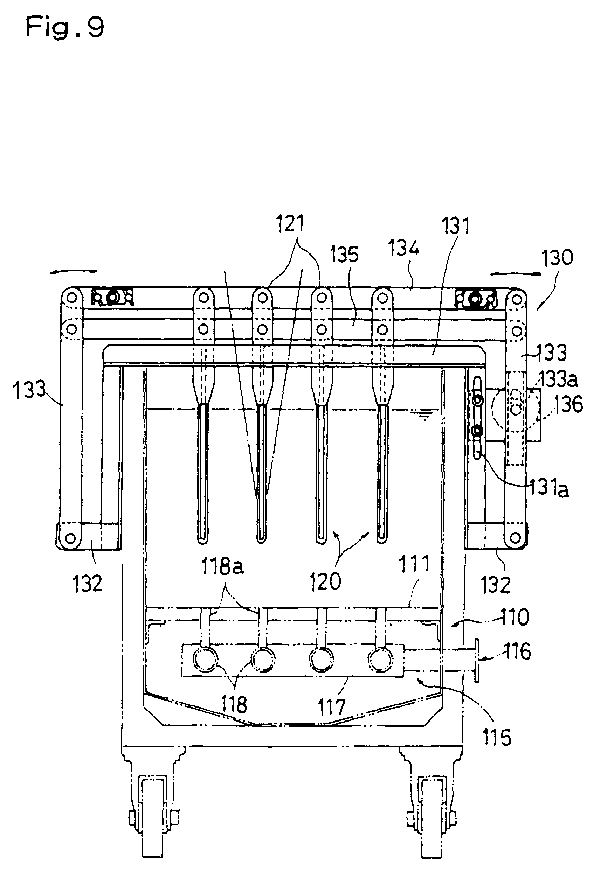

Swinging frames 133 are provided with lower ends thereof supported by the respective swinging support portions 132 for swinging movements; upper and lower links 134 and 135 are bridging both the swinging frames 133 through swinging axes; and an electric motor 136 is fixed to the fixed frame 131 for swinging the swinging frames 133 through a crank portion 133a by the rotation of a driving shaft as shown in FIG. 9.

A portion of the fixed frame 131 to be attached with the electric motor 136 is defined with an elongated hole 131a such that the fixing position of the electric motor 136 can be adjusted in the vertical direction, thereby adjusting the range of angle of the swinging movement. The crank portion 133a changes the rotary movement into a reciprocating movement by a sliding movement of a crank pin on the driving shaft side of the electric motor 136 in an inside groove of a channel member joined to the swinging frame 133.

Another fixed frame 131 is provided on the downstream side to form a pair with the fixed frame 131 on the upstream side, and two bridging frames 131a bridge the fixed frames 131 as shown in FIG. 8. Two swinging movement-transmitting rods 134a bridge the upper links 134 on the upstream side and the downstream side so as to transmit swinging movements on the upstream side to the downstream side.

The agitating plates 120 are axially supported at two positions on the upper link 134 and the lower link 135 to be vertical to a water surface at a reference position where the swinging frames 133 are vertical. As a result, when the swinging frames 133 are caused to swing by rotation of the electric motor 136, the agitating plates 120 are caused to swing through the upper and lower links 134 and 135 while being kept in parallel to the swinging frames 133. At this time, swinging axial centers of the agitating plates 120 are positioned on the agitating plates 120, or on extended faces thereof, at the same height as the swinging axial centers of the swinging frames 133.

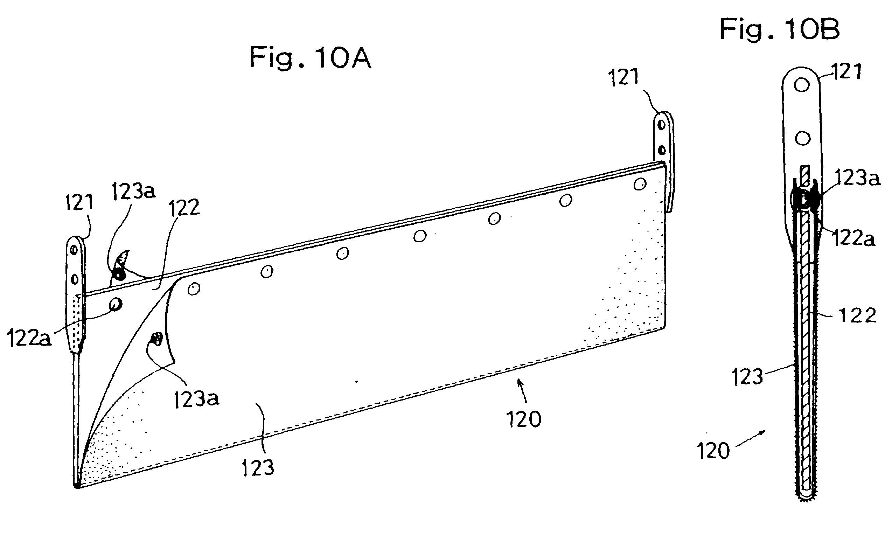

Each of the agitating plates 120 mainly comprises swinging links 121 each of which is axially supported at two positions of the upper link 134 and the lower link 135, a long plate 122 joined to lower end portions of the two swinging links 121, and a hook-and-loop fastener 123 which covers the long plate 122 and is fixed to the long plate 122 by utilizing a plurality of holes 122a in the long plate 122 as shown in a perspective view and a sectional view of FIGS. 10A and 10B.

The hook-and-loop fastener 123 comprises hook parts of the hook-and-loop fastener with cut loops folded in two such that the surface of the hook-and-loop fastener 123 is on the outside. At positions of the hook-and-loop fastener 123, which correspond to the holes 122a in the long plate 122, male and female hooks 123a are provided.

As shown in FIG. 10B, by coupling both the hooks 123a through the holes 122a, the hook-and-loop fastener 123 is fixed to the long plate 122. The hook-and-loop fastener 123 may be in a bag shape with its upper portion open. In this case, after folding the hook-and-loop fastener 123 in two, the lower portions of opposite side end portions may be sewn. Such a hook-and-loop fastener in the bag shape is effective when the agitating plates are cantilevered.

In the vicinity of the partitioning plate 111 below the agitating plates 120, aeration means 115 having releasing outlets 118a for releasing gas into the liquid are provided. The aeration means 115 mainly comprise an air supply portion 116 for supplying gas such as air, a supply pipe 117 extending from the air supply portion 116 and communicating with a portion inside the flow tank 110 and below the partitioning plate 111, and branch pipes 118 which branch off from the supply pipe 117 to extend below the respective agitating plates 120.

A plurality of releasing pipes having the releasing outlets 118a are provided to upper sides of the branch pipes 118. In order to release amounts of gas from the releasing outlets 118a uniformly, a communicating pipe 118b is provided to the downstream end portions of the branch pipes 118, and pressure loss of the releasing outlets 118a is increased to maintain a high pressure in the pipes. The releasing outlets 118a are formed at a proper distance, for example of 5 to 50 cm from each other, such that a vertical agitation can be carried out favorably by an upward-moving stream and a downward-moving stream.

On the most downstream side of the flow tank 110, a solid-liquid separating device 114 such as a screen conveyer is provided. By carrying and separating the food in sequence in the direction shown by an arrow A, a continuous treatment becomes possible.

The flow tank 110 is supported by a box-shaped frame and can be moved by using casters. At the bottom portion of the flow tank 110, a discharge portion 119 is provided.

### Modifications of the embodiments

(1) Although an example is disclosed in the sixth embodiment, in which the liquid is caused to flow in the flow tank by discharging running water supplied from the upstream side in one pass, it is also possible to use a circulation piping having a pump or to utilize the flow of a washing step of a conventional apparatus. When the circulation piping is used, it is preferable to replace the circulating liquid by supplying and discharging a part of the liquid or to provide a filter for removing solids in the liquid.
(2) Although an example is disclosed in the sixth embodiment, in which a plurality of devices for simultaneously driving four agitating plates are provided in series with respect to the long flow tank, the number of agitating plates and the devices may be properly determined according to the length and the width of the flow tank or the amount of contaminants in food to be treated.
(3) Although the sixth embodiment discloses an example, in which the agitating plates are caused to reciprocate and swing with the lower sides thereof functioning as swinging axial centers, it is also possible that the agitating plates are caused to reciprocate and swing with the upper sides or centers thereof functioning as swinging axial centers. Also, the agitating plates may be driven not only to swing but also to rotate or reciprocate if such movements of the agitating plates cause the liquid to flow in a non-linear manner in the flow tank.
(4) Although an example is disclosed in the sixth embodiment, in which the food is taken out by using a solid-liquid separating device such as the screen conveyer provided on the most downstream side of the flow tank, it is also possible to pump up the food with the liquid by using a pump or the like. The screen conveyer or the like is advantageous in connection with relatively big food, i.e. a few centimeters or more in size, but it is disadvantageous in respect of the cost of the apparatus as compared with the pump. Therefore, it is advantageous to use the pump or the like for relatively small food.
   In this case, the food is used in the next step together with the liquid or is separated into liquid and solids by using a filter, a wire netting, or the like. If the sucking capacity of the pump is larger than the supply amount of the liquid, it is preferable to make up a shortfall by supplying water around the sucking inlet.
(5) In th sixth embodiment of the invention, the agitating plates need not necessarily have the swinging axial centers substantially in parallel to the flow direction of the flow tank and need not necessarily swing from their reference positions where the agitating plates are vertical to or inclined with respect to the liquid level, if only the agitating plates cause the liquid to flow non-linearly in the flow tank.

### Process for food treatment

The process for food treatment according to the invention is a process for removing fibrous contaminants included in the food or the food mixture and comprises the step of bringing the treating surface on which a plurality of hooks are formed to stand, into contact with the food or the food mixture. Such a step is carried out by using the apparatus according to the embodiments as described above. At this time, it is preferable that the hooks are made of flexible material and that the treating surface is formed of the hook parts of the hook-and-loop fasteners with cut loops.

### Working Examples

Working examples showing specific conditions and effects of the invention will be described below, wherein the invention is not limited to such examples.

### Example 1

The apparatus according to FIG. 6 was used. The hook parts of the hook-and-loop fasteners, produced by KURARAY Co., Ltd., with cut loops were attached as treating surfaces to the entire faces of the treating surfaces. Chopped cucumbers, an imported product cut in round slices with a thickness of 4 mm, made in China were treated by every 3 tons, 35 times in total, and at a linear velocity of water flow of about 10 cm/s. After each treatment, the number of fibrous contaminants, for example threads, hairs, pieces of resin, and the like, which had adhered to the hook-and-loop fasteners was counted. Results are shown in Table 1.

**Table 1**

| | | | | | | |
|---|---|---|---|---|---|---|
| 111 | 27 | 35 | 72 | 41 | 56 | 34 |
| 29 | 56 | 92 | 87 | 32 | 96 | 20 |
| 87 | 28 | 14 | 91 | 70 | 35 | 61 |
| 36 | 16 | 24 | 26 | 16 | 24 | 46 |
| 38 | 51 | 41 | 49 | 35 | 27 | 33 |

While 20 to 100 fibrous contaminants were included, 49 on average, in the chopped cucumbers made in China as a result of a previous investigation, the average number was 46.7 according to the results of above examples, and thus the removing rate is estimated at 95 %.

On the other hand, the removing rate was 50 % or less, when the same food was treated by using the conventional apparatus as shown in FIG. 12.

Although complaints about the product treated by using the conventional hair-implanted rolls, that contaminants were included in the product, were received 2 to 3 times a month and 5 to 6 times a month at the maximum, no such complaints have been received for five months from the time of the introduction of the apparatus according to the invention up to the present. Based on this finding, it is believed that a removing rate of 95 % or more, if not 100 %, can be maintained by using the apparatus according to the invention.

### Example 2

A treatment similar to the Example 1 was carried out in which the food is replaced by 100 kg of seeds of a beefsteak plant made in Japan. As a result, 19 seeds of dandelion and 41 hair-shaped microscopic contaminants could be removed. Furthermore, few seeds of the beefsteak plant were caught on the treating surfaces, and it was found that the apparatus was also effective to microscopic foods.

## Claims

1. An apparatus for food treatment comprising fiber removing means for removing fibrous contaminants included in food or a food mixture,
wherein the fiber removing means have a treating surface (T), on which a plurality of hooks are formed to stand, and which is disposed to come into contact with the food or the food mixture.

2. The apparatus according to claim 1,
wherein the hooks are made of flexible material.

3. The apparatus according to claim 1 or 2,
wherein the fiber removing means comprise a treating surface (T) formed of a hook part of a hook-and-loop fastener with cut loops.

4. The apparatus according to any of claims 1 to 3,
wherein the fiber removing means comprise a trough (2) of which the longitudinal direction is inclined with respect to a horizontal plane and which is supported for swinging movement with a swinging axial center (O1) mostly in parallel to the longitudinal direction, and a swinging movement applying mechanism (3) for reciprocating and swinging the trough (2) from a reference position of the trough, where the width direction of the trough (2) is substantially horizontal, and the trough (2) is provided at a bottom face (2a) thereof with the treating surface (T).

5. The apparatus according to any of claims 1 to 3,
wherein the fiber removing means comprise a vibration applying mechanism (11) for applying vibration to a placing face (10) on which the food or the food mixture is placed, and the placing face (10) is provided with the treating surface (T).

6. The apparatus according to any of claims 1 to 3,
wherein the fiber removing means comprise a plurality of rolls (21) which are provided at surfaces thereof with the treating surfaces (T) and which are disposed substantially close to each other, and a rotation driving mechanism (22) for rotating the rolls (21) in the same direction.

7. The apparatus according to any of claims 1 to 3,
wherein the fiber removing means comprise a pipe-shaped body (30) provided at the inner face thereof with the treating surface (T) and rotatably supported in a state in which the pipe-shaped body (30) is inclined with respect to a horizontal plane, and a rotation driving mechanism (31) for rotating said pipe-shaped body (30).

8. The apparatus according to any of claims 1 to 3, adapted to receive and treat a food mixture which is liquid including food,
wherein the fiber removing means comprise a flow tank (41) for causing the liquid to flow, and at least one flow controlling plate (42) for causing the liquid to flow non-linearly in the flow tank (41), wherein the flow controlling plate (42) is provided with the treating surface (T).

9. The apparatus according to any of claims 1 to 3, adapted to receive and treat a food mixture which is liquid including food,
wherein the fiber removing means comprise a flow tank (110) for causing the liquid to flow, at least one agitating plate (120) for causing the liquid to flow noninearly in the flow tank, and a driving mechanism (130) for driving the agitating plate (120), wherein the agitating plate (120) is provided with the treating surface (T).

10. The apparatus according to any of claims 1 to 3, adapted to receive and treat a food mixture which is liquid including food,
wherein the fiber removing means comprise a flow tank (110) which is partitioned into upper and lower portions by a partitioning plate (111) having the tendency to prevent the food from passing therethrough and which causes the food to flow on the upper side of the partitioning plate (111) by causing the liquid to flow, at least one agitating plate (120) for swinging from a reference position thereof where the agitating plate (120) is vertical to or inclined with respect to a liquid level with a swinging axial center substantially in parallel to the flow direction of the flow tank (110),
a driving mechanism (136) for reciprocating and swinging the agitating plate (120), and
aeration means (115) which are disposed on the lower side of or in the vicinity of the partitioning plate (111) below the agitating plate (120) and which have a releasing cutlet (118a) for releasing gas into the liquid, wherein the agitating plate (120) is provided with the treating surface (T).

11. A process for food treatment for removing fibrous contaminants included in food or a food mixture,
wherein the process comprises a step of bringing a treating surface (T), on which a plurality of hooks are formed to stand, into contact with the food or the food mixture.

12. The process according to claim 11,
wherein said hooks are made of flexible material.

13. The process according to claim 11 or 12,
wherein the treating surface (T) is formed of a hook part of a hook-and-loop fastener with cut loops.
